# FASCICULE DE BREVET EUROPEEN

(11) **EP 1 227 004 B1**
(45) Date de publication et mention de la délivrance du brevet: **03.11.2004**
(21) Numéro de dépôt: 02364002.2
(22) Date de dépôt: 16.01.2002
(51) Int. Cl.: B60R 9/06

(54) **Dispositif porte-charge à au moins deux positions pour véhicule automobile**
Lasttragevorrichtung mit mindestens zwei Positionen für Kraftfahrzeuge
Cargo carrying device with at least two positions for automotive vehicle

(30) Priorité: 16.01.2001 FR 0100635
(43) Date de publication de la demande: 31.07.2002
(73) Titulaire: WAGON SAS, 79300 Bressuire (FR)
(72) Inventeur: Jeuffray, Jean-Marie, 79300 Noirlieu (FR)
(74) Mandataire: Vidon, Patrice

(56) Documents cités:
- WO-A-97/37872
- DE-A- 4 041 085
- DE-A- 4 320 975
- DE-U- 9 303 510
- DE-U- 29 508 150
- FR-A- 2 668 435
- US-A- 5 330 084
- US-A- 5 775 560

## Description

Le domaine de l'invention est celui du transport de charges, à l'extérieur d'un véhicule automobile. Plus précisément, l'invention concerne les équipements prévus pour être montés à l'arrière d'un véhicule, par exemple pour transporter des vélos, ou divers objets, tels que des valises ou des colis.

On connaît déjà des équipements permettant le transport des vélos, qui peuvent se monter sur une boule d'attelage, ou que l'on solidarise au coffre ou au hayon à l'aide de sangles. La première technique présente l'inconvénient de nécessiter un attelage. La seconde technique a une structure légère, mais suppose un chargement haut, qui nécessite des manipulations peu aisées.

Pour les vélos, une méthode efficace consiste à fournir deux bras sur lesquels la partie haute du cadre vient prendre appui. En effet, le chargement et le déchargement sont alors aisés, puisqu'il suffit de lever légèrement le vélo. Cependant, cette technique est uniquement dédiée aux vélos (et encore, seulement ceux présentant un cadre pouvant coopérer avec les supports). Elle ne permet pas le transport de valises, ou de colis.

On a alors pensé à fournir un équipement horizontal, qui prend appui sur une boule d'attelage, et qui peut former support de valises et de vélos. La mise en place de ces derniers est cependant moins aisée (d'autant plus que, dans certains cas, il convient de retourner le vélo, pour qu'il s'appuie sur la selle et sur le guidon).

En outre, les différents systèmes connus présentent l'inconvénient majeur d'être encombrants, lorsqu'ils sont démontés. On est donc contraint de les laisser au garage, lorsqu'on ne les utilise pas. En conséquence, on ne les a pas toujours à disposition, lorsque le besoin se présente.

De plus, le montage et le démontage ne sont pas toujours aisés, et nécessitent parfois un outillage particulier.

Dans le cas particulier des camping-cars, on a proposé des systèmes se présentant sous la forme de tiroir, logé sous le véhicule, et pouvant être tiré pour former un support de vélos. Cette solution est efficace, mais très lourde et très encombrante. Elle n'est clairement pas adaptée aux véhicules de tourisme, pour lesquels l'espace sous le véhicule est limité, et généralement occupé par la roue de secours, le pot d'échappement, et pour lesquels la question du poids est un problème essentiel.

Le document US_5 775 560 décrit un dispositif porte-charges « multi-fonction » correspondant au préambule de revendication 1 et destiné à être monté à l'arrière d'un véhicule et pouvant notamment recevoir des vélos et des bagages. Cette structure de support articulée peut passer d'une position horizontale à une position verticale.

Un inconvénient de cette technique est que ce dispositif n'est pas repliable. Au contraire, le dispositif doit être solidarisé au véhicule par l'utilisateur lorsque celui-ci souhaite s'en servir, et enlevé après utilisation. Il ne permet donc pas à l'utilisateur de le replier de façon qu'il présente un encombrement réduit pour pouvoir être rangé dans le véhicule ou rester fixé à demeure par exemple.

L'invention a notamment pour objectif de pallier ces différents inconvénients des techniques antérieures.

Plus précisément, un objectif de l'invention est de fournir un dispositif de transport de charge destiné à être monté à l'arrière d'un véhicule, qui permette à la fois le transport de vélos et le transport de valises ou de colis, de façon simple et efficace.

En particulier, un objectif de l'invention est de fournir un tel dispositif qui permette le transport de vélos de façon suspendue, et le transport de valises.

Ainsi, un objectif de l'invention est encore de fournir un tel dispositif, qui soit d'une utilisation aisée, en termes de chargement et de déchargement, et notamment de ne pas nécessiter de renverser les vélos à transporter, ni de les lever à une hauteur importante.

Un autre objectif de l'invention est de fournir un tel dispositif, qui soit simple à mettre en oeuvre, quel que soit le type d'objet transporté, sans outillage ni connaissance particulière.

Ainsi, un objectif de l'invention est de permettre une mise en place du dispositif en un nombre réduit de manipulations.

Encore un autre objectif de l'invention est de fournir un tel dispositif, qui soit d'un coût de revient acceptable, aisé à fabriquer (nombre de pièces, complexité du montage, ...), et qui réponde au moins à certaines contraintes et obligations imposées par les constructeurs et les normes, dont notamment :
- poids ;
- robustesse et endurance ;
- résistance aux chocs et aux vibrations ;
- capacité (moyenne et exceptionnelle) ;
- protection du véhicule et notamment de la carrosserie ;
- sécurité des utilisateurs et des tiers ;
- prise en compte de la plaque de police et de la signalisation ;
- utilisation sur plusieurs types de véhicule ;
- ...

L'invention a également pour objectif, au moins dans certains modes de réalisation, de fournir un tel dispositif, qui puisse être aisément ôté ou escamoté, avec un encombrement très réduit, lorsqu'il n'est pas utilisé. Ainsi, un objectif de l'invention est de permettre que ce dispositif puisse être tout le temps disponible, dans le véhicule, sans occuper un espace trop important et nuisant à la capacité de chargement du véhicule.

Ces objectifs, ainsi que d'autres qui apparaîtront plus clairement par la suite, sont atteints à l'aide d'un dispositif porte-charge destiné à être monté à l'arrière d'un véhicule automobile, comprenant des moyens de solidarisation audit véhicule et une structure de support. Selon l'invention, le dispositif comprend des moyens d'articulation de ladite structure de support par rapport auxdits moyens de solidarisation, de façon que ladite structure de support puisse prendre au moins deux positions de portage :
- une position dite "porte-valises", dans laquelle il s'étend sensiblement dans un plan horizontal ; et
- une position dite "porte-vélos", dans laquelle il forme un angle avec l'horizontale supérieur à 70°.

Ainsi, selon l'invention, on propose un porte-charge ("porte-tout") efficace, et pouvant s'adapter aisément soit au transport des vélos, soit au transport de bagages ou de colis. La structure de support est donc prévue aussi bien pour porter (plan horizontal) que pour supporter (plan se rapprochant de la verticale) des charges.

La structure de support peut avoir une forme fixe et prédéfinie. Cependant, selon un mode de réalisation préférentiel, elle est pliable. Ainsi, avantageusement, ladite structure de support peut prendre au moins deux positions :
- une position de travail, dans laquelle elle est apte au portage d'une charge ;
- une position repliée, dans laquelle elle présente un encombrement réduit.

Ainsi, le dispositif peut être rangé et conservé dans le véhicule, ou encore resté fixé à demeure à celui-ci, comme discuté par la suite.

Selon différents modes de réalisation avantageux, ladite structure de support comprend des moyens de déploiement/repliement permettant le passage de ladite position de travail à ladite position repliée, et vice-versa, appartenant au groupe comprenant :
- les pantographes ;
- les éléments coulissants ;
- les éléments articulés ;
- les combinaisons des éléments ci-dessus.

De façon préférentielle, ladite structure de support peut prendre au moins deux positions de travail, correspondant à des longueurs différentes de déploiement. Il est ainsi possible d'adapter la longueur dépassant du véhicule aux besoins, c'est-à-dire à l'encombrement de la charge transportée.

Dans le cas d'un système à pantographe, ce dernier comprend avantageusement au moins deux jeux d'au moins d'au moins deux croisillons. Ils peuvent se déployer progressivement, de façon liée. Selon une autre approche, le déploiement de chacun desdits jeux correspond à une desdites positions de travail.

Préférentiellement, le dispositif comprend des moyens de verrouillage de ladite structure dans chacune desdites positions de travail.

Diverses techniques de verrouillage peuvent être mises en oeuvre. Par exemple, on peut prévoir une solidarisation des deux croisillons à leur point de croisement et/ou la mise en oeuvre d'une barre latérale reliant l'articulation et la barre de tirage (pouvant également renforcer le support des valises).

De façon avantageuse, ladite structure de support peut prendre au moins deux positions dites "porte-vélos", correspondant à des inclinaisons distinctes par rapport à l'horizontale.

Avantageusement, au moins une desdites positions "porte-vélos" est une position permettant l'ouverture d'une vitre basculante montée sur ledit véhicule.

En d'autres termes, on prévoit au moins une position redressée et au moins une position plus inclinée. Cette dernière permet également de faciliter le chargement des vélos.

Préférentiellement, le dispositif de l'invention comprend au moins deux bras mobiles, montés à l'extrémité de ladite structure de support opposée à l'extrémité coopérant avec lesdits moyens d'articulation, et pouvant être déployés, dans la ou lesdites positions "porte-vélos" de façon à recevoir au moins un vélo.

Selon une autre caractéristique avantageuse de l'invention, l'extrémité de ladite structure de support opposée à l'extrémité coopérant avec lesdits moyens d'articulation présente une barre d'extrémité s'étendant perpendiculairement à l'axe principal dudit véhicule.

Dans ce cas, avantageusement, en position repliée, lesdits bras mobiles se replient pour prendre place à l'intérieur et/ou au voisinage de ladite barre d'extrémité.

Selon un mode de réalisation avantageux, ladite barre d'extrémité est pliable.

Préférentiellement, le dispositif comprend des éléments latéraux coulissants, dans lesquels une partie de ladite barre d'extrémité peut s'inscrire, en position repliée.

Selon un mode de réalisation préférentiel de l'invention, lesdits moyens d'articulation comprennent deux noix d'articulation, maintenant ladite structure de support et permettant son passage d'une desdites positions à une autre position.

Avantageusement, au moins une desdites noix présente des moyens d'indexation de la position de ladite structure de support.

De façon préférentielle, lesdits moyens d'indexation sont contrôlés à l'aide d'une pédale, assurant un déverrouillage lorsqu'elle est actionnée et un retour automatique à une position verrouillée lorsqu'elle est relâchée.

Selon un autre aspect avantageux de l'invention, lesdits moyens de solidarisation comprennent deux prolongements parallèles à l'axe principal dudit véhicule, prévus pour coopérer avec deux logements de réception solidaires dudit véhicule.

Avantageusement, dans ce cas, chacun desdits logements de réception est solidaire d'un des longerons dudit véhicule.

Selon une première variante de l'invention, lesdits moyens de solidarisation permettent une solidarisation réversible, de façon que ledit dispositif puisse être ôté lorsqu'il n'est pas utilisé.

Selon une seconde variante de l'invention, on prévoit que lesdits moyens de solidarisation assurent une liaison fixe avec le véhicule, ledit dispositif pouvant être au moins partiellement escamoté sous et/ou à l'intérieur dudit véhicule.

Dans ce cas, il comprend avantageusement des moyens permettant son coulissement selon l'axe principal du véhicule, qui permettent l'escamotage du dispositif, par exemple à l'intérieur du bouclier. Cet escamotage peut également être obtenu par basculement ou toute autre cinématique adéquate.

En effet, avantageusement, en position repliée, le dispositif prend place dans un logement ménagé à l'intérieur d'un bouclier recouvrant la partie inférieure arrière dudit véhicule.

Dans ce cas, préférentiellement, une trappe est ménagée dans ledit bouclier, permettant le déploiement de ladite structure de support.

De façon avantageuse, ladite trappe porte, sur sa face cachée lorsqu'elle solidaire du bouclier, une plaque de police et/ou des feux, et en ce qu'elle comprend des moyens de solidarisation à ladite structure de support, lorsque cette dernière est déployée.

On apporte ainsi une solution efficace à l'éclairage et à l'installation d'une plaque sur le dispositif.

L'invention concerne également les véhicules automobiles équipés d'un dispositif porte-charge tel que décrit ci-dessus.

D'autres caractéristiques et avantages de l'invention apparaîtront plus clairement à la lecture de la description suivante d'un mode de réalisation de l'invention, donné à titre de simple exemple illustratif et non limitatif, et des dessins annexés parmi lesquels :

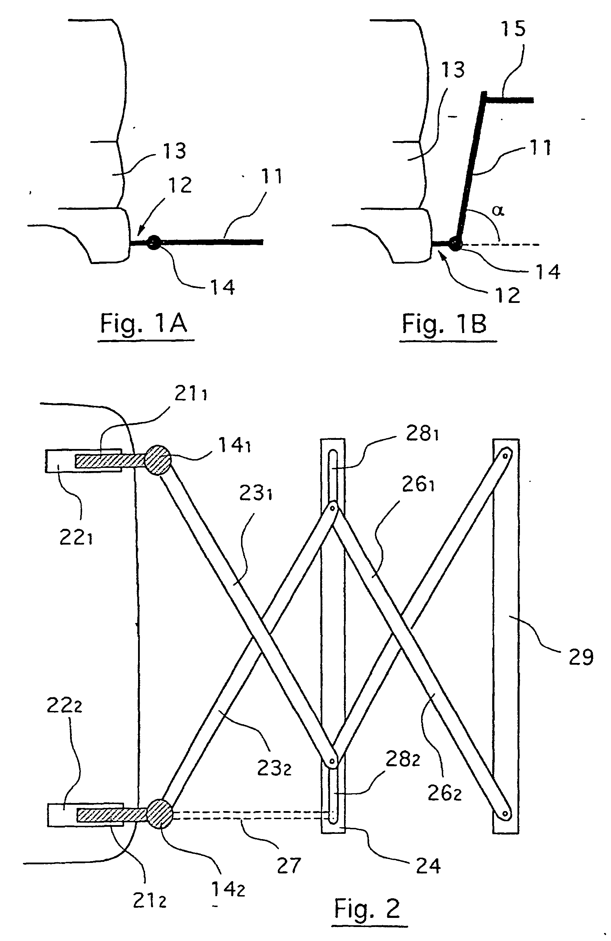

- les figures 1a et 1b illustrent, de façon schématique et simplifiée, le principe général du dispositif de l'invention, respectivement :
   - figure 1a : position « porte-valises» ;
   - figure 1b : position « porte-vélos » ;
- la figure 2 présente, plus en détail, un mode de réalisation du dispositif des figures 1a et 1b, en position « porte-valises », vue de dessus en coupe ;
- les figures 3 a et 3b présentent le dispositif de la figure 2 respectivement :
   - figure 3a : vu de côté, en coupe ;
   - figure 3b : vu de derrière ;
- les figures 4a et 4b montrent, en coupe, deux modes de pliage du dispositif des figures 2, 3a et 3b ;
- la figure 5 présente un mode de réalisation de l'invention, selon lequel le dispositif peut être solidarisé au véhicule et dissimulé lorsqu'il n'est pas utilisé ;
- la figure 6 présente le bouclier du véhicule de la figure 5, derrière lequel est stocké le dispositif ;
- la figure 7 montre le dispositif de la figure 5, en position « porte-valises » ;
- la figure 8 est un exemple de noix d'articulation permettant la mise en oeuvre du dispositif de l'invention ;
- les figures 9 à 11 illustrent, de façon schématique et indicative, diverses autres techniques pouvant être mises en oeuvre dans le cadre de l'invention ;
- les figures 12 et 13 présentent un autre mode de réalisation de l'invention, combinant les techniques des figures 9 et 11 ;
- la figure 14 présente en coupe le dispositif des figures 12 et 13, en position repliée.

L'invention repose donc sur une approche nouvelle des dispositifs de transport d'objets, dits « porte-tout », prévus pour être montés à l'arrière d'un véhicule. Il permet de cumuler les avantages des dispositifs « porte-vélos », supportant les vélos par le cadre, et des dispositifs « porte-valises » sur lesquels des valises ou tout autre colis ou objet à transporter (dans les limites d'encombrement et de poids raisonnables) peuvent être déposés.

Les figures 1a et 1b illustrent ce principe, de façon schématique. Le dispositif « porte-tout » 11 est solidarisé (12) à l'arrière d'un véhicule 13. Il comprend des moyens d'articulation 14 qui lui permettent de s'étendre soit :
- figure 1a : sensiblement horizontalement, pour former un « porte-valises » ;
- figure 1b : proche de la verticale (formant un angle α supérieur à 70 °, tenant compte des contraintes imposées par la carrosserie du véhicule), pour prendre la position « porte-vélos ».

Dans cette dernière position, des extensions 15 sont déployées sur lesquelles on pourra positionner un ou plusieurs vélos.

Des moyens de verrouillage dans l'une et l'autre des positions sont bien sûr prévus. On prévoit également avantageusement les moyens de fixation, d'accrochage, de renfort,... nécessaires à la mise en oeuvre du dispositif et à son utilisation correcte, permettant un transport efficace et fiable, dans le respect des diverses exigences.

La fixation au véhicule peut s'effectuer de plusieurs façons. On peut prévoir des moyens d'accrochage sur le véhicule, par exemple au niveau du pare-chocs ou du bouclier (et éventuellement dissimulés lorsque non utilisés). On peut également exploiter une boule d'accrochage. A priori, il n'est pas nécessaire d'utiliser des sangles ou d'autres moyens de maintien et/ou de renfort. Ils peuvent cependant être prévus, par exemple pour des charges importante et/ou encombrantes.

Selon un mode de réalisation particulier, illustré notamment sur les figures suivantes, le dispositif de l'invention est solidarisé au véhicule à l'aide de moyens solidaires des longerons.

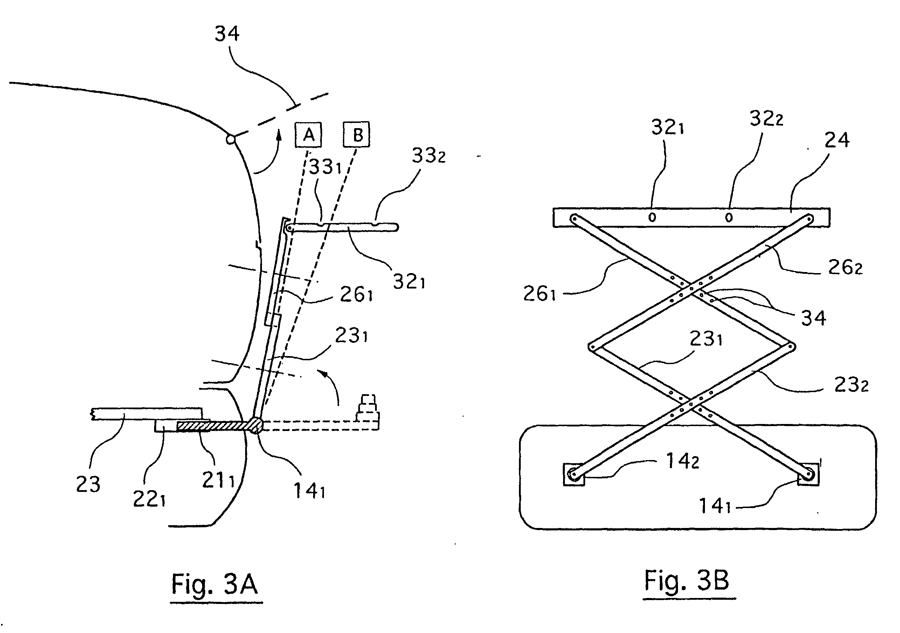

Ainsi, dans le cas de la figure 2, le dispositif comprend deux éléments de solidarisation 21₁ et 21₂ venant s'engager dans des longeronnets 22₁ et 22₂ fixés (figure 3a), par exemple par soudage, aux longerons 31 du véhicule.

Des moyens de verrouillage, non illustrés, sont prévus pour solidariser les éléments de solidarisation aux longeronnets. Cette solidarisation permet un montage et un démontage rapides et efficaces, de préférence sans outil, par exemple à l'aide d'une clé « quart de tour », d'un vis, d'une came... Selon une variante décrite par la suite, le dispositif de l'invention peut également être solidarisé à demeure au véhicule.

De façon avantageuse, le dispositif « porte-tout » de l'invention est non seulement articulé pour pouvoir prendre les deux les deux positions des figures 1a et 1b, mais également repliable. En d'autres termes, il peut prendre une position de travail, déployé, correspondant aux figures 1a et 1b, et une position repliée, dans laquelle son encombrement est réduit. Il peut ainsi être conservé dans le véhicule, par exemple dans le coffre.

Dans le mode de réalisation de la figure 2, ce résultat est obtenu à l'aide d'un mécanisme de type pantographe.

Deux croisillons 23₁ et 23₂ sont respectivement montés à rotation sur l'une de leurs extrémités aux moyens d'articulation 14₁ et 14₂. L'autre de leur extrémités est solidaire d'une barre de tirage 24, dans laquelle elle se déplace, à l'intérieur d'une lumière oblongue prévue à cet effet.

En position repliée, les croisillons 23₁ et 23₂ et la barre de tirage 24 se trouvent alignés et superposés, reliant les deux articulations 14₁ et 14₂. L'encombrement est alors très réduit.

Pour passer en position de travail, il suffit d'éloigner du véhicule la barre de tirage 24, celle-ci restant sensiblement parallèle à l'arrière du véhicule. Les croisillons 23₁ et 23₂ sont entraînés dans des ouvertures oblongues, jusqu'à venir en butée. Le dispositif présente alors par exemple une largeur de 550 mm, pour une longueur (qui reste fixe et correspond à la longueur de la barre de tirage) de 800 mm.

Avantageusement, un deuxième jeu de croisillons 26₁ et 26₂ est prévu, permettant de porter la largeur à, par exemple, 950 mm.

Ces croisillons 26₁ et 26₂ peuvent être solidarisés à une seconde barre 29, la première restant en position intermédiaire, comme illustré en figure 2. Dans ce cas, des ouvertures oblongues 28₁ et 28₂, ou des moyens similaires, permettent le coulissement des extrémités des différents croisillons.

Selon une autre approche, illustrée en figure 3b, on prévoit une seule barre de tirage 24, les croisillons étant solidaires à leurs extrémités. Dans ce cas, il n'est pas nécessaire de prévoir de moyens de coulissement sur la barre de tirage.

Diverses variantes de ce système à pantographe sont envisageables. Tout d'abord, le nombre des croisillons peut être plus élevé. Par ailleurs, les jeux de croisillons peuvent se déployer l'un après l'autre, ou progressivement et simultanément.

Des ouvertures oblongues peuvent être prévues au niveau des articulations (une barre s'étendant entre les deux articulations). Dans ce cas, la barre de tirage peut ou non présenter des ouvertures similaires. Dans le premier cas, les milieux des croisillons sont solidarisés.

Par ailleurs, les ouvertures oblongues peuvent être remplacées par des moyens similaires, tel qu'un axe le long duquel se déplace un coulisseau.

Des moyens de verrouillage sont bien sûr prévus, pour maintenir le dispositif en position déployée. Il peut s'agir de moyens agissant au niveau de la barre de tirage 14 pour empêcher le mouvement du croisillon correspondant (par exemple blocage en butée dans l'ouverture oblongue), ou, lorsque les croisillons ne sont pas liés en leur milieu, d'une clé solidarisant ces derniers lorsqu'ils ont atteint la position voulue. Plusieurs positions 34 peuvent être prévues, correspondant à plusieurs largeurs de déploiement du dispositif, comme illustré en figure 3b.

Une autre approche peut être de prévoir un élément de verrouillage et de renfort 27 qui relie la barre de tirage à l'articulation, de façon à conserver une écartement constant entre les deux. Deux éléments de ce type peuvent être prévus, de part et d'autre du dispositif, sensiblement dans le prolongement des extensions 15. Ils peuvent en outre assurer une fonction de support, pour les valises et les colis. Ils sont articulés sur la barre de tirage 24, et peuvent s'inscrire dans un emplacement prévu à cet effet à l'intérieur de celle-ci, en position repliée.

Bien entendu, plusieurs moyens de verrouillage peuvent être utilisés, parmi ceux décrits ou d'autres. En outre, des moyens de sécurisation antivol peuvent être prévus, avantageusement à l'aide de la clé du véhicule. Ils sécurisent la liaison dispositif/véhicule et/ou la liaison objets transportés/dispositif.

Sur la figure 3a, le dispositif est en position « porte-vélos ». Il a donc été redressé, par rapport à la figure 2, pour prendre la position la plus proche de la verticale, en tenant compte de la forme du véhicule. Ce redressement est possible grâce aux articulations 14₁ et 14₂, dont un mode de réalisation est décrit plus en détail par la suite.

La figure 3b présente le dispositif dans la même position, le véhicule étant vu de derrière. On note que les longeronnets se trouvent souvent au niveau du bouclier 31. Il est donc nécessaire de prévoir dans ce dernier des ouvertures permettant le passage des extensions 15.

Après avoir redressé le dispositif, il suffit de déployer les deux bras 32₁ et 32₂, logés à l'intérieur ou au voisinage de la barre de tirage 24 et articulés sur cette dernière.

Ces bras s'étendant donc sensiblement horizontalement, et sensiblement dans l'axe principal du véhicule. Ils sont prévus pour recevoir, dans l'exemple illustré, deux vélos, dans les encoches 33₁ et 33₂. Avantageusement, des moyens permettent de refermer ces encoches, pour sécuriser le maintien du cadre des vélos.

On comprend qu'il est souhaitable que le dispositif soit le plus redressé possible, pour que la longueur supplémentaire ajoutée au véhicule soit réduite, et que les vélos soient éloignés du sol. Cependant, dans l'exemple de véhicule illustré en figure 3a, on constate que cela empêche l'ouverture de la vitre basculante 34. Pour pallier ce problème, on prévoit que, en position « porte-vélos », le dispositif peut prendre au moins deux positions illustrées par les lettres « A » et « B ».

La position « A » correspond au cas déjà décrit. Dans la position « B », l'angle formé avec l'horizontale est réduit, ce qui permet l'ouverture de la vitre. Un autre avantage de cette position « B» est qu'elle permet un chargement plus aisé, la position des bras étant plus basse.

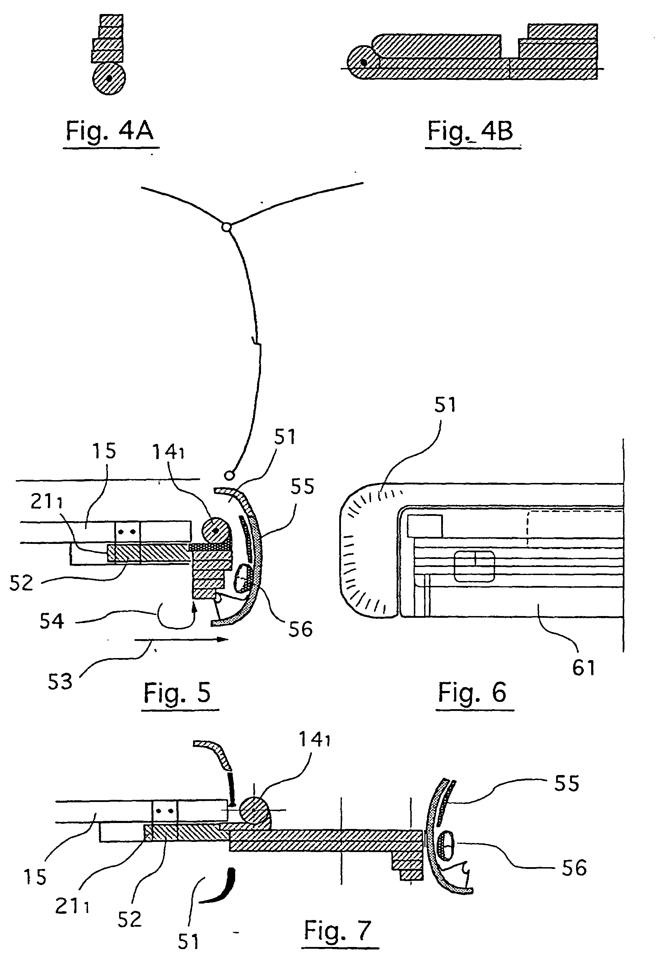

Comme déjà indiqué, le dispositif de l'invention peut présenter un encombrement très réduit, lorsqu'il est replié. La cinématique peut être telle que les différents éléments se superposent (figure 4a) ou permettent un pliage plus large, mais moins haut (figure 4b).

Selon une variante de l'invention, illustrée notamment par les figures 5 à 7, le dispositif « porte-tout » reste solidarisé à demeure au véhicule. Il trouve alors place, lorsqu'il n'est pas utilisé, à l'intérieur du bouclier 51. L'extension 15 est reliée au longeron par au moins une patte de fixation 52, soudée ou vissée.

Du fait de la faible place disponible, le pliage est ici du type illustré en figure 4a. Cependant, différentes variantes pourront être envisagées, en fonction des contraintes imposées par le véhicule.

Ainsi que cela est illustré en figure 6 (qui présente la moitié gauche du bouclier l'autre moitié s'en déduisant par symétrie), le bouclier 51 est équipé d'une trappe amovible 61, permettant, lorsqu'elle est ôtée de sortir le dispositif de son logement.

Le déploiement comprend une première étape consistant à dégager les moyens d'articulation 14 hors du bouclier. Il peut s'agir d'un coulissement (flèche 53), sur 100 à 150 mm par exemple, ou d'un basculement (flèche 54). La deuxième étape amène le dispositif en position « porte-valises », comme illustré en figure 7.

Dans tous les cas, le dispositif est équipé de moyens permettant de supporter et d'alimenter en électricité les feux d'éclairage obligatoires, ainsi que la plaque minéralogique. Dans le cas des figures 5 à 7, une solution efficace est d'adapter la trappe 61 à cet effet.

Sur sa face interne (lorsqu'elle est montée sur le bouclier) celle-ci présente une plaque 55 et des feux 56. Lorsque le dispositif est déployé, la trappe vient prendre place à l'extrémité du dispositif (figure 7), à l'aide de moyens de fixation prévus à cet effet, et alimentés en électricité. On résout ainsi efficacement le problème de l'éclairage et de la plaque, et celui du stockage de la trappe 51.

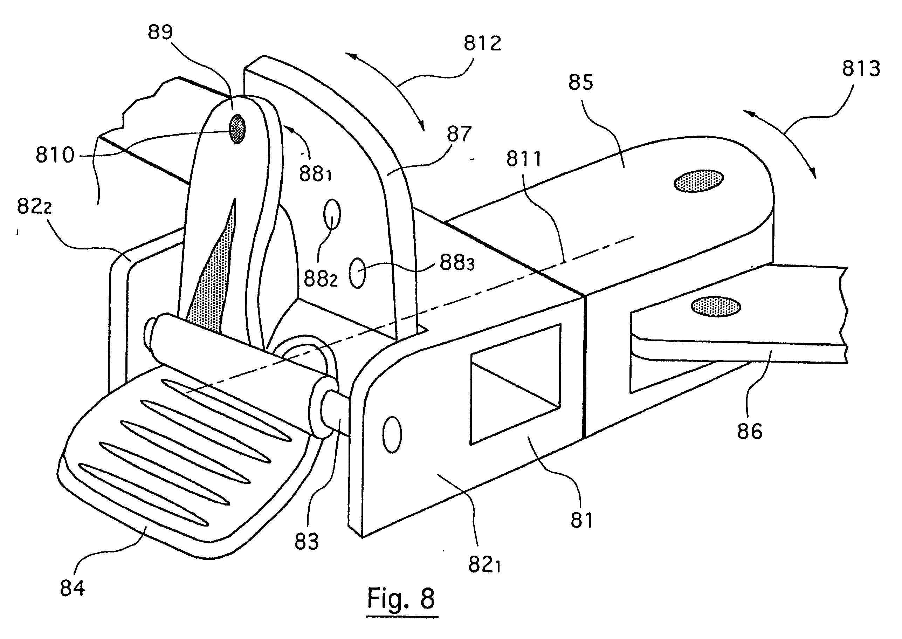

La figure 8 illustre un mode de réalisation d'une noix d'articulation pouvant être utilisé dans le dispositif décrit ci-dessus.

La noix, réalisée par exemple en aluminium injecté sous pression, comprend une partie 81 de section rectangulaire prévue pour pénétrer dans un longeronnet du véhicule. Un verrouillage des deux pièces, en bout ou sous le véhicule est prévu.

Deux ailettes 82₁ et 82₂, solidaires de cette partie 81, portent un axe 83 sur lequel sont montés en rotation des moyens de verrouillage, actionnables par une pédale 84. Cette solution est efficace, l'utilisateur contrôlant le verrouillage du pied, et gardant les mains disponibles pour guider et soutenir le dispositif entre les différentes positions.

La partie mobile en rotation comprend un élément 85 de support d'un croisillon 86, et une plaque 87 de verrouillage, portant trois ouvertures 88₁ à 88₃ (ou des trous borgnes), correspondant aux différentes positions :
- 88₁ : position "porte-valises" ;
- 88₂ : position "porte-vélos B" ;
- 88₃ : position "porte-vélos A".

Lorsque l'on actionne la pédale 84, on déplace la patte 89, qui porte un pion 810, coopérant avec les ouvertures 88. Le pion 810 et l'ouverture 88 sont alors désolidarisés, et la rotation autour de l'axe 811 (traversant la partie de section rectangulaire 81) est possible, permet un changement de position, le déplacement (812) de la plaque 87 étant lié à celui (813) de l'élément 85 (et donc des moyens de support). Selon d'autres approches, l'axe peut passer au-dessus ou au-dessous de la partie 81.

Il suffit de relâcher la pédale (des moyens de rappel la ramenant vers sa position de verrouillage) pour que le pion 810 s'encliquète à nouveau dans l'ouverture 88 sélectionnée.

Bien sûr, de nombreux autres modes de réalisation sont envisageables, pour obtenir un résultat similaire.

Par ailleurs, l'utilisation de la pédale ne pouvant être effectuée que d'un seul côté, on prévoit avantageusement, de l'autre côté, un déverrouillage manuel préalable. Un système de commande déportée, par exemple par câble ou par tringle, peut également être mis en oeuvre, de façon que l'action sur la pédale assure le déverrouillage des deux articulations.

On notera également que les moyens d'articulation peuvent également être constitués, ou comprendre, un ou plusieurs moyens formant charnière (s'étendant sur toute la largeur du dispositif, ou aux emplacements nécessaires).

Comme déjà mentionné, le pliage de l'invention peut être réalisé de nombreuses façons, et non seulement à l'aide d'un pantographe. Afin d'illustrer, de façon indicative et non limitative, différentes variantes, on discute ci-après rapidement les figures de principe 9 à 11.

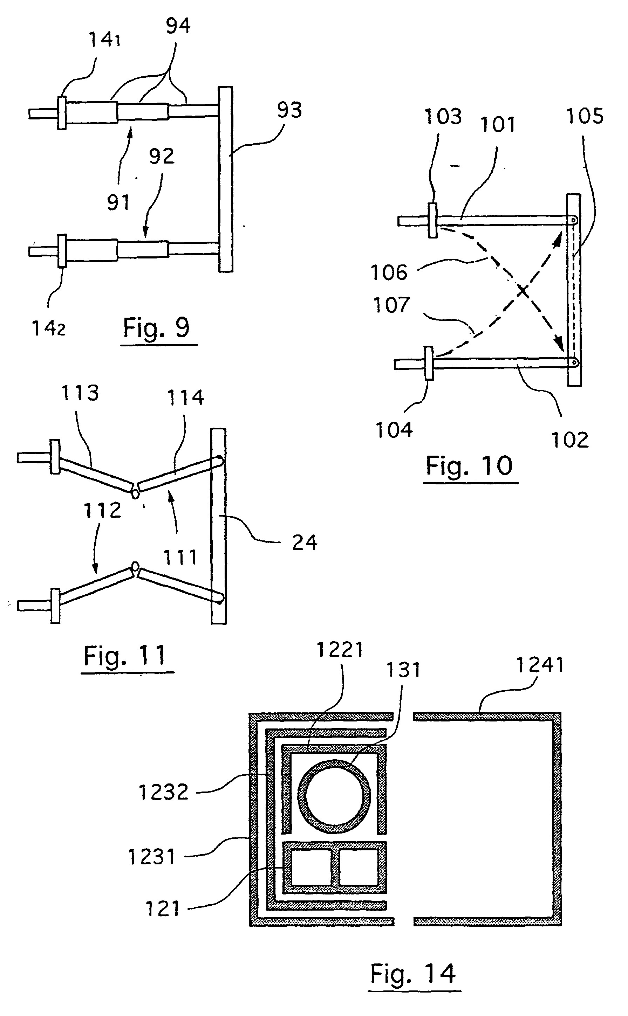

Sur la figure 9, on a représenté un dispositif dans lequel deux bras 91 et 92 portent la barre de tirage 93. Ils s'étendent parallèlement à l'axe principal du véhicule (axe "avant-arrière"), et sont composés de plusieurs éléments 94 s'emboîtant les uns dans les autres lors du repliage. Il est ainsi possible de choisir plusieurs longueurs de déploiement, et d'obtenir un ensemble très compact, notmment si l'on prévoit que lest éléments emboîtés peuvent venir parallèles à la barre de tirage, ou pénétrer sous le véhicule.

Dans le cas d'un dispositif lié au véhicule, on peut prévoir que les bras 91 et 92 sont en une seule pièce, et coulissent sous le véhicule.

L'exemple de la figure 10 présente deux bras 101 et 102 dont une première extrémité est articulé sur une des noix d'articulation 103 et 104, et dont la seconde extrémité coulisse à l'intérieur ou sur la barre de tirage 105. Les flèches 106 et 107 illustrent le déplacement de ces deuxièmes extrémités.

La figure 11 illustre le cas de deux bras 111 et 112 formés de deux branches articulées 113 et 114 formant compas.

Bien entendu, ces différents modes de réalisation peuvent être modifiés, adaptés, complétés, et combinés.

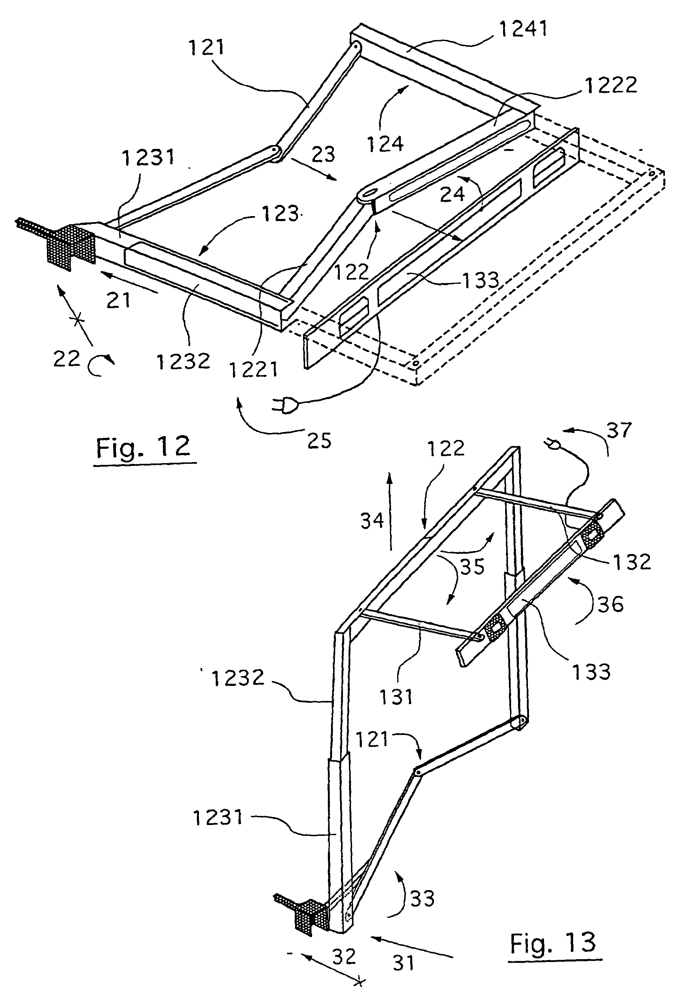

Ainsi, par exemple, les figures 12 et 13 présentent un mode de réalisation de l'invention, combinant les techniques des figures 9 et 11.

Selon ce mode de réalisation, le pliage est effectué dans deux directions (l'élément correspondant à la barre de tirage étant lui même pliable) ce qui permet, de réduire encore l'encombrement.

Ainsi, le dispositif comprend deux éléments 121 et 122 formant compas, et s'étendant sensiblement parallèlement à l'arrière du véhicule, lorsque le dispositif est déployé.

Deux éléments latéraux 123 et 124 s'étendent perpendiculairement à l'arrière du véhicule, reliant les éléments 121 et 122. Chacun de ces éléments latéraux est constitué de deux pièces 1231 et 1232 coulissantes l'une dans l'autre, et correspondant à deux positions déployées, ou de travail, distinctes :
- figure 12 (traits pleins) : seule une pièce 1231 est déployée, et le dispositif s'étend sur environ 500 mm ;
- figure 12 (traits pleins) et figure 13 : la pièce coulissante 1232 est également déployée, pour atteindre un développement de l'ordre de 900 mm.

Ce mécanisme permet d'obtenir un pliage très compact. Il suffit de repousser l'élément 121 vers le véhicule pour que la pièce 1211 s'inscrive à l'intérieur de la pièce 1231 (qui contient la pièce coulissante 1232), cette dernière venant simultanément prendre place parallèlement à l'arrière du véhicule.

Sur la figure 13, correspondant à la position "porte-vélos", on a déployé les bras 131 et 132 de support de vélos, qui s'inscrivent également, en position repliée, à l'intérieur de l'élément 121.

Aux extrémités libres de ces bras 131 et 132, on rapporte le support 133 de plaque et des feux. Dans la position "porte-valises" de la figure 12, ce support est monté directement sur l'élément 121.

A titre indicatif, on précise maintenant rapidement le montage de ce dispositif.

Dans la position "porte-valises" (figure 12) :
- 21: introduire les éléments de solidarisation dans les longeronnets ;
- 22 : verrouiller ces éléments de solidarisation aux longeronnets ;
- 23: tirer l'élément 121 jusqu'à ce que les deux pièces le constituant soient alignées ;
- 23bis : si nécessaire, continuer à tirer l'élément 121, pour déployer les éléments coulissants (en pointillés) ;
- 24 : placer le support de plaque et des feux ;
- 25 : connecter l'alimentation électrique.

Dans la position "porte-vélos" (figure 13) :
- 31: introduire les éléments de solidarisation dans les longeronnets ;
- 32 : verrouiller ces éléments de solidarisation aux longeronnets ;
- 33 : basculer le support dans la position "porte-vélos" ;
- 34: tirer l'élément 121 jusqu'à ce que les deux pièces le constituant soient alignées, puis déployer les éléments coulissants ;
- 35 : déployer les bras support de vélos ;
- 36 : placer le support de plaque et des feux ;
- 37 : connecter l'alimentation électrique.

Le rangement se déduit directement du déploiement. Comme déjà mentionné, on obtient en mode replié un volume très compact, la plupart des éléments constitutifs trouvant place à l'intérieur des éléments 1231 et 1241 montés sur les articulations. La figure 14 illustre cet aspect; en coupe et sensiblement à l'échelle (bien que d'autres dimensions puissent être choisies). La longueur est alors de l'ordre de 450 mm.

Les deux éléments 1231 et 1241 se trouvent en vis-à-vis. Par simplification, on a détaillé uniquement le contenu de l'élément 1231 (le reste se déduisant par symétrie). On distingue successivement :
- les éléments 1231 et 1232, qui peuvent coulisser l'un par rapport à l'autre ;
- la moitié de l'élément 121;
- l'élément 1221 ;
- le bras de support 131.

## Revendications

1. Dispositif porte-charge HP destiné à être monté à l'arrière d'un véhicule automobile (13), comprenant des moyens de solidarisation (12 ; 21₁,21₂) audit véhicule et une structure de support,
comprenant des moyens d'articulation (14; 14₁,14₂) de ladite structure de support par rapport auxdits moyens de solidarisation, de façon que ladite structure de support puisse prendre au moins deux positions de portage :
- une position dite « porte-valises », dans laquelle elle s'étend sensiblement dans un plan horiztontal; et
- une position dite « porte-vélos », dans laquelle elle forme un angle avec l'horizontale supérieur à 70°,
**caractérisé en ce que** ladite structure de support comprend des moyens de déploiement/repliement lui permettant de prendre au moins deux positions :
- une position de travail, au moins partiellement déployée, dans laquelle elle est apte au portage d'une charge ;
- une position repliée, dans laquelle elle présente un encombrement réduit.

2. Dispositif porte-charge selon la revendication 1, **caractérisé en ce que** lesdits moyens de déploiement/repliement permettant le passage de ladite position de travail à ladite position repliée, et vice-versa, comprennent au moins un pantographe (23₁,23₂).

3. Dispositif porte-charge selon l'une quelconque des revendications 1 et 2, **caractérisé en ce que** lesdits moyens de déploiement/repliement permettant le passage de ladite position de travail à ladite position repliée, et vice-versa, comprennent au moins un élément coulissant (91,92).

4. Dispositif porte-charge selon l'une quelconque des revendications 1 à 3, **caractérisé en ce que** lesdits moyens de déploiement/repliement permettant le passage de ladite position de travail à ladite position repliée, et vice-versa comprennent au moins un élément articulé (111, 112, 113,114).

5. Dispositif porte-charge selon l'une quelconque des revendications 1 à 4, **caractérisé en ce que** lesdits moyens de déploiement/repliement peuvent être déployés sur au moins deux longueurs différentes de déploiement, correspondant à au moins deux positions de travail de ladite structure de support.

6. Dispositif selon les revendications 2 à 5, **caractérisé en ce que** ledit pantographe comprend au moins deux jeux d'au moins deux croisillons (23₁,23₂,26₁,26₂).

7. Dispositif porte-charge selon l'une quelconque des revendications 1 à 6, **caractérisé en ce qu'**il comprend des moyens de verrouillage (27) de ladite structure dans chacune desdites positions de travail.

8. Dispositif porte-charge selon l'une quelconque des revendications 1 à 7, **caractérisé en ce que** ladite structure de support peut prendre au moins deux positions dites « porte-vélos », dans laquelle ladite structure forme des angles distincts par rapport à l'horizontale.

9. Dispositif porte-charge selon la revendication 8, **caractérisé en ce qu'**au moins une desdites positions « porte-vélos » est une position permettant l'ouverture d'une vitre basculante (34) montée sur ledit véhicule.

10. Dispositif porte-charge selon l'une quelconque des revendications 1 à 9, **caractérisé en ce qu'**il comprend au moins deux bras mobiles (15; 32₁,32₂), montés à l'extrémité de ladite structure de support opposée à l'extrémité coopérant avec lesdits moyens d'articulation, et pouvant être déployés, dans la ou lesdites positions « porte-vélos » de façon à recevoir au moins un vélo.

11. Dispositif porte-charge selon l'une quelconque des revendications 1 à 10, **caractérisé en ce que** l'extrémité de ladite structure de support opposée à l'extrémité coopérant avec lesdits moyens d'articulation présente une barre d'extrémité s'étendant perpendiculairement à l'axe principal dudit véhicule (29).

12. Dispositif porte-charge selon les revendications 10 et 12, **caractérisé en ce que**, en position repliée, lesdits bras mobiles (15 ; 32₁,32₂) se replient pour prendre place à l'intérieur et/ou au voisinage de ladite barre d'extrémité.

13. Dispositif porte-charge selon l'une quelconque des revendications 10 à 12, **caractérisé en ce que** ladite barre d'extrémité est pliable.

14. Dispositif porte-charge selon la revendication 13, **caractérisé en ce qu'**il comprend des éléments latéraux coulissants (91,92), dans lesquels une partie de ladite barre d'extrémité vient s'inscrire, en position repliée.

15. Dispositif porte-charge selon l'une quelconque des revendications 1 à 14, **caractérisé en ce que** lesdits moyens d'articulation comprennent deux noix d'articulation (103,104), maintenant ladite structure de support et permettant son passage d'une desdites positions à une autre position.

16. Dispositif porte-charge selon la revendication 15, **caractérisé en ce qu'**au moins une desdites noix présente des moyens d'indexation (88₁,88₂, 88₃, 89, 810) de la position de ladite structure de support.

17. Dispositif porte-charge selon la revendication 16, **caractérisé en ce que** lesdits moyens d'indexation son contrôlés à l'aide d'une pédale (84), assurant un déverrouillage lorsqu'elle est actionnée et un retour automatique à une position verrouillée lorsqu'elle est relâchée.

18. Dispositif porte-charge selon l'une quelconque des revendications 1 à 17, **caractérisé en ce que** lesdits moyens de solidarisation comprennent deux prolongements parallèles (21₁,21₂) à l'axe principal dudit véhicule, prévus pour coopérer avec deux logements (22₁,22₂) de réception solidaires dudit véhicule.

19. Dispositif porte-charge selon la revendication 18, **caractérisé en ce que** chacun desdits logements de réception est solidaire d'un des longerons dudit véhicule.

20. Dispositif porte-charge selon l'une quelconque des revendications 18 et 19, **caractérisé en ce que** lesdits moyens de solidarisation permettent une solidarisation réversible, de façon que ledit dispositif puisse être ôté lorsqu'il n'est pas utilisé.

21. Dispositif porte-charge selon l'une quelconque des revendications 18 et 19, **caractérisé en ce que** lesdits moyens de solidarisation assurent une solidarisation fixe, ledit dispositif pouvant être au moins partiellement escamoté sous et/ou à l'intérieur dudit véhicule.

22. Dispositif porte-charge selon la revendication 21, **caractérisé en ce qu'**il comprend des moyens permettant son coulissement selon l'axe principal du véhicule.

23. Dispositif porte-charge selon l'une quelconque des revendications 21 et 22, **caractérisé en ce que**, en position repliée, il prend place dans un logement ménagé à l'intérieur d'un bouclier (51) recouvrant la partie inférieure arrière dudit véhicule.

24. Dispositif porte-charge selon la revendication 23, **caractérisé en ce qu'**une trappe (61) est ménagée dans ledit bouclier (51), permettant le déploiement de ladite structure de support.

25. Dispositif porte-charge selon la revendication 24, **caractérisé en ce que** ladite trappe (61) porte, sur sa face cachée lorsqu'elle est solidaire du bouclier (51), une plaque de police (55) et/ou des feux (56), et **en ce qu'**elle comprend des moyens de solidarisation à ladite structure de support, lorsque cette dernière est déployée.

26. Véhicule automobile équipé d'un dispositif porte-charge selon l'une quelconque des revendications 1 à 25.

## Patentansprüche

1. Lastenträger (11), der am hinteren Teil eines Kraftfahrzeuges (13) angebracht werden soll und der über Verbindungsmittel (12, 21₁; 21₂) mit diesem Fahrzeug sowie über eine Trägerstruktur verfügt und Gelenkmittel (14; 14₁; 14₂) dieser Trägerstruktur im Verhältnis zu den Verbindungsmitteln aufweist, um der Trägerstruktur das Einnehmen von mindestens zwei Tragepositionen zu ermöglichen:
- eine "Kofferträger" genannte Position, bei der sie in etwa in einer horizontalen Ebene liegt und
- eine "Fahrradträger" genannte Position, bei der sie mit der Horizontalen einen Winkel von mehr als 70° bildet,
**dadurch gekennzeichnet, dass** die Trägerstruktur über Mittel zum Entfalten/Zusammenfalten verfügt, die ihr das Einnehmen von mindestens zwei Positionen ermöglicht:
- eine zumindest teilweise entfaltete Arbeitsposition, in der sie eine Last tragen kann;
- eine zusammengefaltete Position, bei der sie einen geringen Platzbedarf aufweist.

2. Lastenträger nach Anspruch 1,
**dadurch gekennzeichnet, dass** diese Mittel zum Entfalten/Zusammenfalten, die den Übergang der Arbeitsposition in die zusammengefaltete Position und umgekehrt ermöglichen, mindestens eine Doppelscherenstruktur (23₁, 23₂) aufweisen.

3. Lastenträger nach einem der Ansprüche 1 und 2,
**dadurch gekennzeichnet, dass** die Mittel zum Entfalten/Zusammenfalten, die den Übergang der Arbeitsposition in die zusammengefaltete Position und umgekehrt ermöglichen, mindestens ein gleitendes Element (91, 92) aufweisen.

4. Lastenträger nach einem der Ansprüche 1 bis 3,
**dadurch gekennzeichnet, dass** die Mittel zum Entfalten/Zusammenfalten, die den Übergang der Arbeitsposition in die zusammengefaltete Position und umgekehrt ermöglichen, mindestens ein Gelenkelement (111, 112, 113, 114) aufweisen.

5. Lastenträger nach einem der Ansprüche 1 bis 4,
**dadurch gekennzeichnet, dass** sich die Mittel zum Entfalten/Zusammenfalten über mindestens zwei verschiedene Entfaltungslängen entfalten lassen, die mindestens zwei Arbeitspositionen der Trägerstruktur entsprechen.

6. Lastenträger nach einem der Ansprüche 2 bis 5,
**dadurch gekennzeichnet, dass** die Doppelschere mindestens zwei Sätze von mindestens zwei Kreuzstreben (23₁, 23₂, 26₁, 26₂) aufweisen.

7. Lastenträger nach einem der Ansprüche 1 bis 6,
**dadurch gekennzeichnet, dass** er über Mittel (27) zum Verriegeln der erwähnten Struktur in einer jeden der benannten Arbeitspositionen verfügt.

8. Lastenträger nach einem der Ansprüche 1 bis 7,
**dadurch gekennzeichnet, dass** die Trägerstruktur mindestens zwei "Fahrradträger" benannte Positionen einnehmen kann, bei denen die Struktur verschiedene Winkel mit der Horizontale bildet.

9. Lastenträger nach Anspruch 8,
**dadurch gekennzeichnet, dass** mindestens eine der "Fahrradträger" genannten Positionen derart ist, dass sie das Öffnen einer am Fahrzeug befindlichen schwenkbaren Fensterscheibe (34) ermöglicht.

10. Lastenträger nach einem der Ansprüche 1 bis 9,
**dadurch gekennzeichnet, dass** er mindestens zwei bewegliche Arme (15, 32₁, 32₂) umfasst, die am Ende der Trägerstruktur angebracht sind, welche dem mit den Gelenkmitteln zusammenwirkenden Ende entgegengesetzt liegt und in der Position bzw. in den Positionen, die "Fahrradträger" benannt wird oder werden, um mindestens ein Fahrrad aufzunehmen.

11. Lastenträger nach einem der Ansprüche 1 bis 10,
**dadurch gekennzeichnet, dass** das Ende der Trägerstruktur, die dem Ende entgegen liegt, welches mit den Gelenkmitteln zusammenwirkt, eine Endstange aufweist, die sich senkrecht zur Hauptachse des Fahrzeugs (29) erstreckt.

12. Lastenträger nach einem der Ansprüche 10 und 11,
**dadurch gekennzeichnet, dass** in der zusammengefalteten Position, die beweglichen Arme (15; 32₁, 32₂) zurückgefaltet werden, um innerhalb und/oder in der Nähe der Endstange untergebracht zu werden.

13. Lastenträger nach einem der Ansprüche 10 bis 12,
**dadurch gekennzeichnet, dass** die Endstange sich zusammenfalten lässt.

14. Lastenträger nach Anspruch 13,
**dadurch gekennzeichnet, dass** er seitlich gleitende Elemente (91, 92) aufweist, in denen ein Teil der Endstange hineinragt.

15. Lastenträger nach einem der Ansprüche 1 bis 14,
**dadurch gekennzeichnet, dass** die Gelenkmittel mindestens zwei Gelenkscheiben (103, 104) umfassen, welche die Trägerstruktur halten und ihren Übergang aus einer der erwähnten Positionen in eine andere Position ermöglichen.

16. Lastenträger nach Anspruch 15,
**dadurch gekennzeichnet, dass** mindestens eine der erwähnten Scheiben Mittel zum Indizieren (88₁, 88₂, 88₃, 89, 810) der Position der Trägerstruktur aufweist.

17. Lastenträger nach Anspruch 16,
**dadurch gekennzeichnet, dass** die Mittel zum Indizieren mit Hilfe eines Pedals (84) gesteuert werden, das beim Betätigen eine Entriegelung und ein automatisches Zurückkehren in eine verriegelte Position beim Loslassen bewirkt.

18. Lastenträger nach einem der Ansprüche 1 bis 17,
**dadurch gekennzeichnet, dass** die Verbindungsmittel zwei parallel zur Hauptachse des Fahrzeugs verlaufende Verlängerungen (21₁, 21₂) aufweisen, die so ausgelegt sind, dass sie mit zwei Aufnahmegehäusen (22₁, 22₂) des Fahrzeuges zusammenwirken.

19. Lastenträger nach Anspruch 18,
**dadurch gekennzeichnet, dass** jedes der erwähnten Aufnahmegehäuse mit einem der Längsträger des Fahrzeuges verbunden ist.

20. Lastenträger nach einem der Ansprüche 18 oder 19,
**dadurch gekennzeichnet, dass** die Verbindungsmittel eine umkehrbare Verbindung ermöglichen, so dass der Lastenträger entfernt werden kann, wenn er nicht benutzt wird.

21. Lastenträger nach einem der Ansprüche 18 oder 19,
**dadurch gekennzeichnet, dass** die Verbindungsmittel eine feste Verbindung gewährleisten, wobei der Lastenträger zumindest teilweise unter und/oder innerhalb des Fahrzeuges verborgen werden kann.

22. Lastenträger nach Anspruch 21,
**dadurch gekennzeichnet, dass** er über Mittel verfügt, die sein Gleiten in Richtung der Hauptachse des Fahrzeuges zulassen.

23. Lastenträger nach einem der Ansprüche 21 oder 22,
**dadurch gekennzeichnet, dass** er in der zusammengefalteten Position in einem Gehäuse Platz findet, das innerhalb eines den unteren Rückteil des Fahrzeuges abdeckenden Schild (51) angebracht ist.

24. Lastenträger nach Anspruch 23,
**dadurch gekennzeichnet, dass** eine im Schilde (51) angebrachte Falle (61) das Entfalten der Trägerstruktur ermöglicht.

25. Lastenträger nach Anspruch 24,
**dadurch gekennzeichnet, dass** die Falle (61) auf der, wenn sie einen Teil des Schildes (51) bildet, verborgenen Fläche ein Nummernschild (55) und/oder Lichter (56) trägt und, dass sie über Mittel verfügt, die sie mit der Trägerstruktur verbinden, wenn diese entfaltet ist.

26. Kraftfahrzeug, das mit einem Lastenträger nach einem der Ansprüche 1 bis 25 ausgerüstet ist.

## Claims

1. Load-carrying device (11) which is intended for fitting on the rear of a motor vehicle (13), comprising means for integration (12; 21₁, 21₂) with the said vehicle and a support structure,
comprising means for articulation (14; 14₁, 14₂) of the said support structure in relation to the said means for integration, in such a way that the said support structure can take at least two carrying positions:
- a position called "suitcase-carrying", in which it extends approximately in a horizontal plane; and
- a position called "bicycle-carrying", in which it forms an angle greater than 70° to the horizontal,
**characterized in that** the said support structure comprises means for expansion/withdrawal, enabling it to take at least two positions:
- a working position, at least partly expanded, in which it is suitable for carrying a load;
- a withdrawn position, in which it takes up less space.

2. Load-carrying device according to Claim 1, **characterized in that** the said means for expansion/withdrawal making it possible to pass from the said working position to the said withdrawn position and vice versa include at least one pantograph (23₁, 23₂).

3. Load-carrying device according to any one of Claims 1 and 2, **characterized in that** the said means for expansion/withdrawal making it possible to pass from the said working position to the said withdrawn position and vice versa include at least one sliding element (91, 92).

4. Load-carrying device according to any one of Claims 1 to 3, **characterized in that** the said means for expansion/withdrawal making it possible to pass from the said working position to the said withdrawn position and vice versa include at least one articulated element (111, 112, 113, 114).

5. Load-carrying device according to any one of Claims 1 to 4, **characterized in that** the said means for expansion/withdrawal can be expanded to at least two different expansion lengths, corresponding to at least two working positions of the said support structure.

6. Device according to Claims 2 to 5, **characterized in that** the said pantograph includes at least two sets of at least two cross-braces (23₁, 23₂, 26₁, 26₂).

7. Load-carrying device according to any one of Claims 1 to 6, **characterized in that** it includes means of locking (27) the said structure into each of the said working positions.

8. Load-carrying device according to any one of Claims 1 to 7, **characterized in that** the said support structure can take at least two positions called "bicycle-carrying", in which the said structure forms distinct angles in relation to the horizontal.

9. Load-carrying device according to Claim 8, **characterized in that** at least one of the said "bicycle-carrying" positions is a position which makes it possible to open a tilting pane (34) which is fitted on the said vehicle.

10. Load-carrying device according to any one of Claims 1 to 9, **characterized in that** it includes at least two mobile arms (15; 32₁, 32₂), which are fitted at the end of the said support structure opposite the end which co-operates with the said articulation means, and can be expanded into the position(s) called "bicycle-carrying" in order to receive at least one bicycle.

11. Load-carrying device according to any one of Claims 1 to 10, **characterized in that** the end of the said support structure opposite the end which co-operates with the said articulation means has an end bar which extends perpendicularly to the principal axis of,the said vehicle (29).

12. Load-carrying device according to Claims 10 and 12, **characterized in that**, in the withdrawn position, the said mobile arms (15; 32₁, 32₂) are withdrawn to take up space within and/or near the said end bar.

13. Load-carrying device according to any one of Claims 10 to 12, **characterized in that** the said end bar is pliable.

14. Load-carrying device according to Claim 13, **characterized in that** it includes sliding lateral elements (91, 92), into which part of the said end bar comes to be inserted, in the withdrawn position.

15. Load-carrying device according to any one of Claims 1 to 14, **characterized in that** the said articulation means include two articulation nuts (103, 104), maintaining the said support structure and enabling it to pass from one of the said positions to another position.

16. Load-carrying device according to Claim 15, **characterized in that** at least one of the said nuts has means of indexing (88₁, 88₂, 88₃, 89, 810) the position of the said support structure.

17. Load-carrying device according to Claim 16, **characterized in that** the said indexing means are controlled using a pedal (84), providing unlocking when it is operated and automatic return to a locked position when it is released.

18. Load-carrying device according to any one of Claims 1 to 17, **characterized in that** the said integration means include two parallel extensions (21₁, 21₂) to the principal axis of the said vehicle, these being provided to cooperate with two integrated receiving housings (22₁, 22₂) of the said vehicle.

19. Load-carrying device according to Claim 18, **characterized in that** each of the said receiving housings is integrated with one of the chassis frame side rails of the said vehicle.

20. Load-carrying device according to any one of Claims 18 and 19, **characterized in that** the said integration means allow reversible integration, in such a way that the said device can be removed when it is not in use.

21. Load-carrying device according to any one of Claims 18 and 19, **characterized in that** the said integration means provide fixed integration, it being possible to retract the said device at least partially under and/or within the said vehicle.

22. Load-carrying device according to Claim 21, **characterized in that** it includes means enabling it to slide according to the principal axis of the vehicle.

23. Load-carrying device according to any one of Claims 21 and 22, **characterized in that**, in the withdrawn position, it takes up space in a housing which is arranged within a filler panel (51) which covers the lower rear part of the said vehicle.

24. Load-carrying device according to Claim 23, **characterized in that** a flap (61) is arranged in the said filler panel (51), making it possible to expand the said support structure.

25. Load-carrying device according to Claim 24, **characterized in that** the said flap (61) carries, on its hidden face when it is integrated with the filler panel (51), a number plate (55) and/or lights (56), and that it includes means for integration with the said support structure when the latter is expanded.

26. Motor vehicle equipped with a load-carrying device according to any one of Claims 1 to 25.
